(19) Europäisches Patentamt
European Patent Office
Office européen des brevets

(11) **EP 1 388 017 B1**

(12) **EUROPÄISCHE PATENTSCHRIFT**

| | |
|---|---|
| (45) Veröffentlichungstag und Bekanntmachung des Hinweises auf die Patenterteilung:<br>**22.04.2009   Patentblatt 2009/17** | (51) Int Cl.:<br>***G08G 1/16*** *(2006.01)*     ***G01S 13/93*** *(2006.01)*<br>*B60R 1/00* *(2006.01)*      *B60W 40/04* *(2006.01)*<br>*B60W 30/12* *(2006.01)*     *B60W 30/16* *(2006.01)* |
| (21) Anmeldenummer: **02708234.6** | (86) Internationale Anmeldenummer:<br>**PCT/DE2002/000500** |
| (22) Anmeldetag: **13.02.2002** | (87) Internationale Veröffentlichungsnummer:<br>**WO 2002/084330 (24.10.2002 Gazette 2002/43)** |

(54) **VERFAHREN ZUR ERKENNUNG EINES SPURWECHSELS EINES FAHRZEUGS**

METHOD FOR RECOGNISING A CHANGE IN LANE OF A VEHICLE

PROCEDE DE RECONNAISSANCE D'UN CHANGEMENT DE VOIE EFFECTUE PAR UN VEHICULE

| | |
|---|---|
| (84) Benannte Vertragsstaaten:<br>**DE FR GB IT** | (72) Erfinder:<br>• **WINNER, Hermann**<br>  **76467 Bietigheim (DE)**<br>• **LUEDER, Jens**<br>  **70806 Kornwestheim (DE)** |
| (30) Priorität: **12.04.2001   DE 10118265** | |
| (43) Veröffentlichungstag der Anmeldung:<br>**11.02.2004   Patentblatt 2004/07** | (56) Entgegenhaltungen:<br>**EP-A- 0 890 470      EP-A- 1 034 963**<br>**WO-A-01/79013      WO-A-01/79882**<br>**WO-A-99/30919      WO-A-99/32318** |
| (73) Patentinhaber: **ROBERT BOSCH GMBH**<br>**70442 Stuttgart (DE)** | |

EP 1 388 017 B1

**Beschreibung**

Stand der Technik

Die Erfindung betrifft ein Verfahren zur Erkennung eines Spurwechsels eines Fahrzeugs, das ein winkelauflösendes Ortungsgerät zur Ortung vorausfahrender Fahrzeuge und eine Einrichtung zur Bestimmung der eigenen Gierrate aufweist.

Für Kraftfahrzeuge sind Abstands- und Geschwindigkeitsregeleinrichtungen bekannt, die auch als ACC-Systeme ("Adaptive Cruise Control") bezeichnet werden. Bei diesen Systemen werden Objekte, beispielsweise vorausfahrende Fahrzeuge, die sich auf der von dem eigenen Fahrzeug befahrenen Fahrspur befinden, mit Hilfe eines Ortungsgerätes erfaßt, beispielsweise mit Hilfe eines winkelauflösenden Radarsystems, mit dem der Abstand und auch die Relativgeschwindigkeit des vorausfahrenden Fahrzeugs gemessen werden kann. Das Winkelauflösungsvermögen eines solchen Radarsystems wird bisher dazu benutzt, die erfaßten Objekte auf ihre Plausibilität überprüfen, so daß beispielsweise Fahrzeuge auf der eigenen Spur von Verkehrsschildern oder Markierungen am Fahrbahnrad oder von Fahrzeugen auf anderen Spuren unterschieden werden können.

Wenn sich ein vorausfahrendes Fahrzeug auf der eigenen Spur im Ortungsbereich des Radars befindet, wird die Fahrgeschwindigkeit durch Eingriff in das Antriebs- oder Bremssystem des Fahrzeugs so geregelt, daß ein geschwindigkeitsabhängiger Abstand zum vorausfahrenden Fahrzeug eingehalten wird. Befindet sich dagegen kein Fahrzeug im Ortungsbereich auf der eigenen Spur, so erfolgt eine Regelung auf eine vom Fahrer gewählte Wunschgeschwindigkeit.

In DE 196 37 245 A1 wird ein ACC-System beschrieben, bei dem die Plausibilitätsauswertung der Radarsignale modifiziert wird, wenn der Fahrer durch Betätigen des linken oder rechten Blinkschalters die Absicht zu einem Spurwechsel zu erkennen gibt. In dieser Situation wird der für die Abstandsregelung in Betracht gezogene Fahrkorridor vorübergehend auf die künftige neue Fahrspur erweitert, und für die Abstandsregelung werden sowohl die Fahrzeuge auf der bisherigen Fahrspur als auch die Fahrzeuge auf der künftigen Fahrspur berücksichtigt. Der Fahrkorridor ist dabei definiert als ein Streifen bestimmter, ggf. variabler Breite beiderseits des voraussichtlichen eigenen Fahrkurses. Bei geradem Fahrbahnverlauf ist der eigene Fahrkurs durch eine Gerade gegeben, die in Fahrtrichtung durch die Mitte des Fahrzeugs verläuft. Bei gekrümmtem Fahrbahnverlauf kann näherungsweise angenommen werden, daß der voraussichtliche Fahrkurs eine Kurve mit konstanter Krümmung ist. Unter der Annahme einer stationären Kurvensituation kann die jeweilige Krümmung berechnet werden, indem die Gierrate des eigenen Fahrzeugs durch die Fahrgeschwindigkeit definiert wird. Die Gierrate läßt sich im Prinzip aus dem Lenkeinschlag und der Fahrgeschwindigkeit bestimmen, wird jedoch vorzugsweise mit Hilfe eines Gierratensensors direkt gemessen, zumal ein solcher Gierratensensor bei Fahrzeugen mit einem elektronischen Stabiltätsregelsystem (ESP) ohnehin vorhanden ist.

In nichtstationären Situationen, insbesondere während eines Spurwechsels, erweist sich eine genaue Bestimmung des Fahrkorridors jedoch als schwierig. Eine Auswertung des Signals des Blinkschalters führt hier für sich allein nicht weiter, da das Setzen des Blinkers nur die Absicht zu einem Spurwechsel anzeigt, jedoch nicht erkennen läßt, wann genau der Spurwechsel beginnt und wann er endet. Auch durch zusätzliche Berücksichtigung der Lenkbefehle des Fahrers läßt sich der Spurwechsel nicht zweifelsfrei erkennen, da die Lenkbefehle auch durch einen gekrümmten Fahrbahnverlauf veranlaßt sein können. Aufgrund dieser Unsicherheiten bei der Erkennung eines Spurwechsels kann es bisher leicht zu Störungen des Regelsystems kommen, etwa dergestalt, daß die Radarkeule während des Spurwechsels vorübergehend über den Fahrbahnrad hinaus schwenkt und Standziele wie Verkehrsschilder oder dergleichen am Fahrbahnrand als vermeintlich relevante Objekte identifiziert oder daß bei drei- oder mehrspurigen Fahrbahnen Fahrzeuge auf der übernächsten Spur irrtümlich dem eigenen Fahrkorridor zugeordnet werden. Für eine genaue Zuordnung der mit dem Ortungsgerät erfaßten Objekte zum relevanten Fahrkorridor des Fahrzeugs wäre es deshalb wünschenswert, wenn ein Spurwechsel zuverlässig erkannt werden könnte.

Dokument EP-A-1 034 963, des als nächstliegender Stand der Technik anseden wird, veröffentlicht ein Verfahren entsprechend den merkmalen des Oberbegriffs des Anspruchs 1.

Aufgabe, Lösung und Vorteile der Erfindung

Aufgabe der Erfindung ist es, ein Verfahren anzugeben, daß eine genauere Erkennung eines Spurwechsels ermöglicht.

Diese Aufgabe wird erfindungsgemäß dadurch gelöst, daß die Winkelgeschwindigkeit mindestens eines vorausfahrenden Fahrzeugs relativ zum eigenen Fahrzeug mit Hilfe des Ortungsgerätes gemessen wird und ein den Spurwechsel anzeigendes Spurwechselsignal durch Vergleich der gemessenen Winkelgeschwindigkeit mit der eigenen Gierrate gebildet wird.

Die Erfindung beruht auf der Überlegung, daß bei einem Spurwechsel, anders als bei einer Kurvenfahrt, eine ausgeprägte negative Korrelation zwischen der Relativwinkelgeschwindigkeit vorausfahrender Fahrzeuge und der eigenen Gierrate besteht. Dies liegt daran, daß bei einem beginnenden Spurwechsel das eigene Fahrzeug eine Gierbewegung, also eine Drehung um die Hochachse, mit einer relativ hohen Gierrate, d.h., einer relativ hohen Winkelgeschwindigkeit ausführt, während die vom Ortungsgerät erfaßten Objekte an dieser Drehung nicht teilnehmen und deshalb relativ zum eigenen Fahrzeug eine dem Betrage nach gleiche aber entgegengesetzt gerichtete Winkelgeschwindigkeit haben. Beim Durchfahren einer Kurve mit konstanter Krümmung führen dagegen das eigene Fahrzeug und die vorausfahrenden Fahrzeuge - per gleicher Fahrgeschwindigkeit - dieselbe Drehung aus, so daß die Relativwinkelgeschwindigkeit der vorausfahrenden Fahrzeuge annähernd null bleibt. Lediglich beim Einfahren in eine Kurve oder beim Ausfahren aus der Kurve kann ein gewisser Unterschied zwischen der Relativwinkelgeschwindigkeit des vorausfahrenden Fahrzeuges und der Gierrate des eigenen Fahrzeugs auftreten, doch sind diese Unterschiede im allgemeinen deutlich geringer als bei einem Spurwechsel. Der Vergleich der Relativwinkelgeschwindigkeiten mit der eigenen Gierrate liefert daher ein sehr zuverlässiges Kriterium für die Erkennung eines Spurwechsels.

Vorteilhafte Ausgestaltungen der Erfindung ergeben sich aus den Unteransprüchen.

Da bei höherer Verkehrsdichte im allgemeinen mehrere vorausfahrende Fahrzeuge gleichzeitig vom Ortungsgerät erfaßt werden, ist es zweckmäßig, aus den gemessenen Relativwinkelgeschwindigkeiten mehrerer oder aller erfaßten Fahrzeuge eine Kollektivwinkelgeschwindigkeit zu bilden, beispielsweise durch Bildung eines Mittelwertes oder eines abstands- oder winkelabhängig gewichteten Mittelwertes. Durch stärkere Gewichtung von Fahrzeugen, die nur eine geringe Winkelabweichung zum eigenen Kurs haben, lassen sich Störeffekte mildern, die durch Relativgeschwindigkeiten der vorausfahrenden Fahrzeuge verursacht werden. Ähnlich lassen durch stärkere Gewichtung von Fahrzeugen, die nur einen geringen Abstand zum eigenen Fahrzeug haben, Störeffekte mildern, die beim Einfahren in Kurven auftreten. Allerdings wird das Winkelsignal von Fahrzeugen mit geringem Abstand im allgemeinen aufgrund der Eigenbewegungen dieser Fahrzeuge stärker verrauscht sein. Zur Unterdrückung eines solchen Rauschens kann generell zusätzlich zu der Mitteilung über die Fahrzeuge auch eine zeitliche Mitteilung vorgenommen werden. Da die Radarmessungen im allgemeinen periodisch in einem festen Regelzyklus wiederholt werden, bietet sich eine Mitteilung über mehrere Regelzyklen an, wobei auch hier wieder die weiter zurückliegenden Zyklen schwächer gewichtet werden können.

Darüber hinaus kann bei der Bestimmung der Kollektivwinkelgeschwindigkeit auch eine Plausibilitätsauswirkung stattfinden. Beispielsweise kann es bei drei oder mehr georteten Fahrzeugen zweckmäßig sein, "Ausreißer" zu eliminieren, deren Winkelgeschwindigkeit deutlich von der der übrigen Fahrzeuge abweicht. Dadurch lassen sich insbesondere Störeffekte mildern, die durch einen Spurwechsel eines der vorausfahrenden Fahrzeuge verursacht werden. Wenn sich nur zwei vorausfahrende Fahrzeuge im Ortungsbereich befinden, wird ein Spurwechsel eines der vorausfahrenden Fahrzeuge generell nur dann anzunehmen sein, wenn eines dieser Fahrzeuge zum Überholen ansetzt oder den Überholvorgang beendet hat. Diese Situationen lassen sich anhand der gemessenen Abstands- und Relativgeschwindigkeitsdaten erkennen.

Aufgrund ähnlicher Überlegungen kann es zweckmäßig sein, Fahrzeuge, die gerade erst im Ortungsbereich erschienen sind, weil sie das eigene Fahrzeug überholt haben, erst mit einer gewissen zeitlichen Verzögerung in die Berechnung der Kollektivwinkelgeschwindigkeit einzubeziehen.

Bei der Ermittlung der Relativwinkelgeschwindigkeiten der einzelnen Fahrzeuge kann es zweckmäßig sein, eine Korrektur im Hinblick auf die Relativgeschwindigkeit dieser Fahrzeuge vorzunehmen. Zum Beispiel hat ein Fahrzeug, das gerade vom eigenen Fahrzeug überholt wird, eine von Null verschiedene Relativwinkelgeschwindigkeit, ohne daß dies auf einen Spurwechsel des eigenen Fahrzeugs hindeutet. Diese Relativwinkelgeschwindigkeit ist proportional zu dem Produkt aus der Relativgeschwindigkeit und dem Winkel, unter dem das Fahrzeug geortet wird, dividiert durch den Abstand dieses Fahrzeugs und kann durch Subtraktion eines entsprechenden Korrekturterms eliminiert werden.

Wenn die Kollektivwinkelgeschwindigkeit $\omega_e$ der vorausfahrenden Fahrzeuge und die Gierrate $\omega_0$ des eigenen Fahrzeugs ermittelt wurden, so erhält man ein Signal LC, das mit hoher Verläßlichkeit auf einen Spurwechsel des eigenen Fahrzeugs hindeutet, indem man das Negative des Kreuzkorrelationswertes dieser Größen bildet: $LC = -\omega_0{}^*\omega_e/(\omega_e + \omega_0)$. Sobald dieses Signal einen bestimmten Schwellenwert übersteigt, kann angenommen werden, daß ein Spurwechsel des eigenen Fahrzeugs vorliegt.

Wahlweise kann zusätzlich das Signal des Blinkschalters berücksichtigt werden, etwa dergestalt, daß bei eingeschaltetem Blinksignal der Schwellenwert, mit dem das Signal LC verglichen wird, herabgesetzt wird. Dabei kann auch unterschieden werden, ob der linke oder der rechte Blinker gesetzt wurde, und eine Schwellwertherabsetzung findet nur dann statt, wenn der Spurwechsel in der richtigen Richtung erfolgt. Die Richtung des Spurwechsels ist durch das Vorzeichen von $\omega_0$ gegeben.

Zur Stützung der Aussagesicherheit kann auch das Gierratensignal $\omega_0$ auf ein für Spurwechsel typisches Muster überprüft werden. Bei einem Spurwechsel zeigt dieses Signal einen charakteristischen S-förmigen Verlauf. Gemäß einer weiteren Ausgestaltung der Erfindung läßt sich aus diesem Muster auch das voraussichtliche Ende des Spurwechsels vorhersagen. Alternativ kann angenommen werden, daß der Spurwechsel nach Ablauf einer bestimmten, ggf. geschwindigkeitsabhängigen Zeitspanne nach Erkennung des Spurwechsels abgeschlossen ist.

Das in dieser Weise gewonnene Spurwechselsignal kann im Rahmen eines ACC-Systems und auch darüber hinaus in vielfältiger Weise genutzt werden. Insbesondere ist es möglich, bei Erkennung eines beginnenden Spurwechsels den eigenen Fahrkorridor geeignet anzupassen. Dabei kann auch berücksichtigt werden, daß in der Mitte des Spurwechsels die Fahrtrichtung des eigenen Fahrzeugs von der Fahrbahnrichtung abweicht. Die Größe dieser Winkelabweichung läßt sich durch zeitliche Integration des Gierratensignals, des Kollektivwinkelgeschwindigkeitssignals oder einer Kombination aus beiden quantitativ bestimmen und kann dann zur Korrektur des voraussichtlichen Fahrkurses und damit des Fahrkorridors benutzt werden. So läßt sich verhindern, daß während des Spurwechsels irrtümlich Standziele am Fahrbahnrad ausgewertet werden. In einer einfacheren Ausführungsform läßt sich dieser Effekt auch dadurch erreichen, daß während des Spurwechsels die Ortungstiefe des Ortungsgerätes reduziert wird, so daß weiter entfernte Objekte bei der Abstandsregelung unberücksichtigt bleiben.

Weiterhin kann das Spurwechselsignal dazu benutzt werden, den Fahrkorridor vorübergehend auf die Nachbarspur, die die zukünftige Fahrspur bildet, zu erweitern und ihn nach Beendigung des Spurwechsels wieder auf die neue Fahrspur zu verengen. Ebenso ist es denkbar, mit Hilfe des Spurwechselsignals bestimmte Zusatzfunktionen auszulösen, die in dem ACC-System implementiert sind, beispielsweise eine Überholhilfe, die durch automatische Beschleunigung oder Verzögerung des Fahrzeugs das Einfädeln in den fließenden Verkehr auf der künftigen Fahrspur unterstützt. Darüber hinaus kann das Spurwechselsignal auch für Sonderfunktionen außerhalb der eigentlichen ACC-Regelung ausgewertet werden, beispielsweise für eine Lichtsteuerung, die die Strahlrichtung der Scheinwerfer des Fahrzeugs automatisch anpaßt.

Es sind auch Regelsysteme bekannt, die durch Auswertung eines Kamerabildes oder mit Hilfe sonstiger Sensoren den Fahrbahnverlauf erfassen und durch Eingriff in die Lenkung des Fahrzeugs die Spurhaltung unterstützen (Lane Keeping Support). Wenn das Fahrzeug mit einem solchen System ausgestattet ist, läßt sich der Spurwechsel zwar auch direkt durch Auswertung der Sensorsignale erkennen, die den Fahrbahnrad erfassen, doch kann in diesem Fall das erfindungsgemäße Verfahren ergänzend zur Validitätsprüfung eingesetzt werden.

KURZBESCHREIBUNG DER ZEICHNUNG

Im folgenden wird ein Ausführungsbeispiel der Erfindung anhand der Zeichnung näher erläutert.

Es zeigen:

Fig. 1    ein Blockdiagramm eines Abstands- und Geschwindigkeitsregelsystems für Kraftfahrzeuge, das für die Durchführung des erfindungsgemäßen Verfahrens ausgebildet ist;

Fig. 2    ein Diagramm einer dreispurigen Fahrbahn mit Fahrkorridoren, in denen sich für die Abstandsregelung relevante vorausfahrende Fahrzeuge befinden;

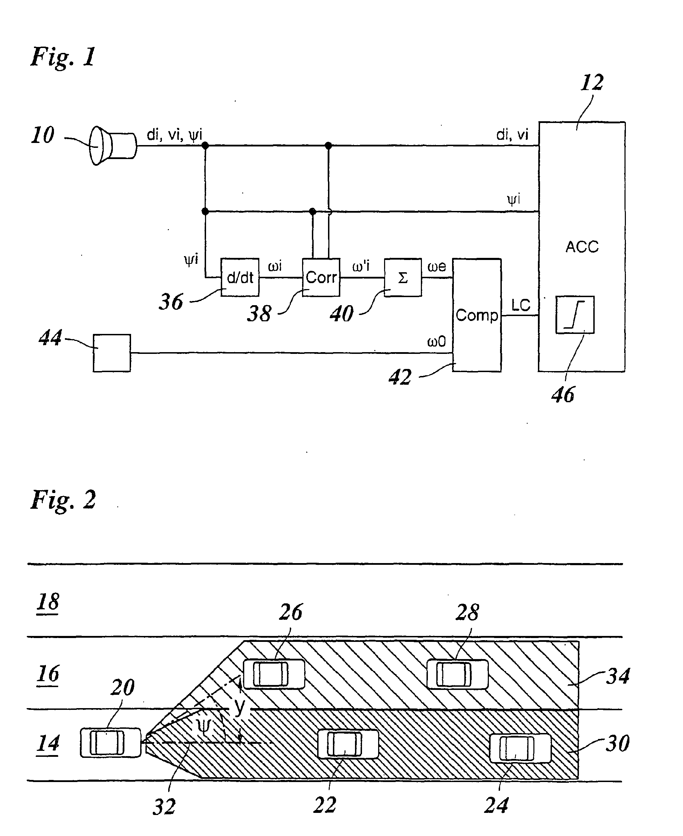

Fig, 3    ein Diagramm entsprechend Figur 2, zur Illustration eines Spurwechsels des eigenen Fahrzeugs;

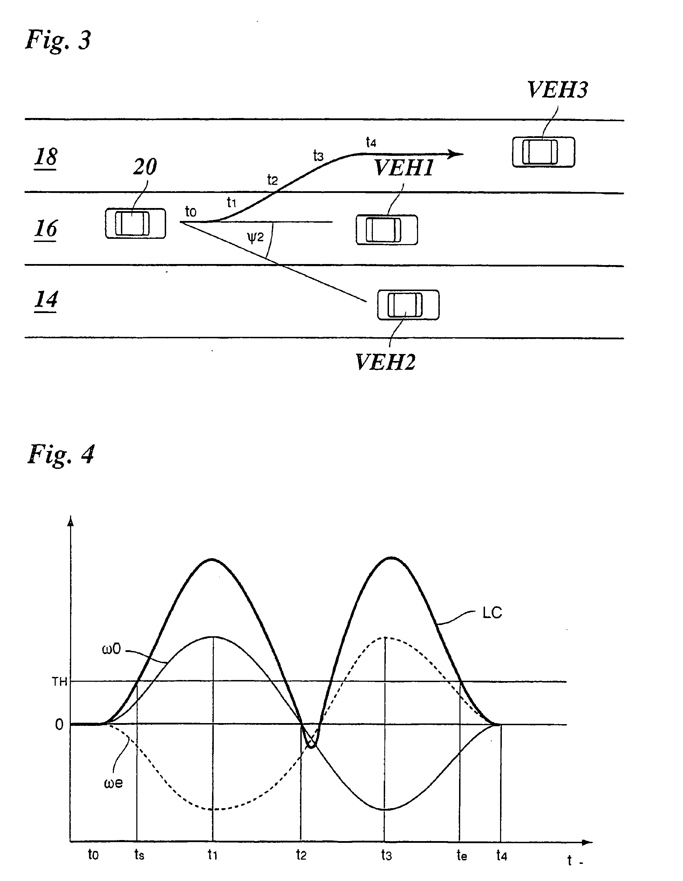

Fig. 4    den zeitlichen Verlauf verschiedener Größen, die den in Figur 3 gezeigten Spurwechsel charakterisieren;

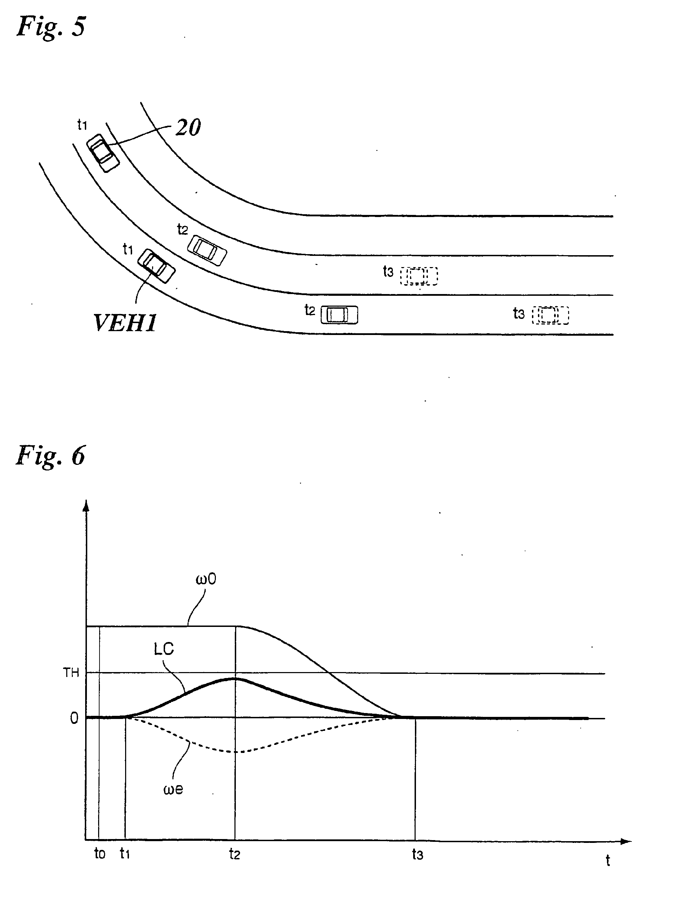

Fig. 5    ein Diagramm einer Fahrsituation, bei der das geregelte Fahrzeug und ein vorausfahrendes Fahrzeug aus einer Kurve ausfahren; und

Fig. 6    den zeitlichen Verlauf derselben Größen wie in Figur 4 für die in Figur 5 gezeigte Fahrsituation.

BESCHREIBUNG EINES AUSFÜHRUNGSBEISPIELS

Da der Aufbau und die Wirkungsweise eines Abstands- und Geschwindigkeitsregelsystems, im folgenden als ACC-System bezeichnet, als solche bekannt sind, werden in Figur 1 nur diejenigen Komponenten eines solchen Systems gezeigt, die für das Verständnis der Erfindung von Bedeutung sind.

Als Ortungsgerät für vorausfahrende Fahrzeuge ist ein Radarsensor 10 vorgesehen, der vorn am geregelten Fahrzeug angebracht ist und periodisch die vor dem Fahrzeug befindlichen Zielobjekte, beispielsweise vorausfahrende Fahrzeuge und feste Standziele am Fahrbahnrad ortet. Durch Auswertung des Radarechos werden im Radarsensor selbst oder in einer nachgeschalteten Verarbeitungseinheit Signale erzeugt, die die Abstände $d_i$, die Relativgeschwindigkeiten $v_i$ (in Radialrichtung) und die Azimutwinkel $\psi_i$ der georteten Objekte angeben. Die Azimutwinkel sind hier auf die augenblickliche Geradeaus-Richtung des Fahrzeugs bezogen. Positive Azimutwinkel entsprechen einer Winkelabweichung im mathematisch positiven Sinn, also nach links.

Eine elektronische Regeleinrichtung 12 wertet die vom Radarsensor 10 gelieferten Daten aus und greift in das Antriebssystem und ggf. auch das Bremssystem des Fahrzeugs ein, um die Fahrzeuggeschwindigkeit so zu regeln, daß ein angemessener, geschwindigkeitsabhängiger Abstand zu dem auf der eigenen Spur unmittelbar vorausfahrenden Fahrzeug eingehalten wird. Wenn kein vorausfahrendes Fahrzeug geortet wird, erfolgt eine Regelung auf eine vom Fahrer gewählte Wunschgeschwindigkeit. Standziele am Fahrbahnrad werden anhand der Winkelsignale und der Relativgeschwindigkeit von vorausfahrenden Fahrzeugen unterschieden. Da das ACC-System vornehmlich für den Einsatz auf mehrspurigen Schnellstraßen und Autobahnen vorgesehen ist, muß bei vorausfahrenden Fahrzeugen auch unterschieden werden, auf welcher Fahrspur sie sich befinden. Im Normalfall sollten für die Abstandsregelung nur die Fahrzeuge auf der eigenen Spur berücksichtigt werden.

Figur 2 zeigt als Beispiel eine Richtungsfahrbahn mit drei Spuren 14, 16, 18. Ein mit dem ACC-System nach Figur 1 ausgerüstetes Fahrzeug 20, im folgenden als das "eigene Fahrzeug" bezeichnet, befährt die rechte Spur 14, und vorausfahrende Fahrzeuge 22, 24, 26, 28 befinden sich auf den Spuren 14 und 16. Für die Abstandsregelung werden nur die Daten der Fahrzeuge 22, 24 berücksichtigt, die sich innerhalb eines begrenzten Abstandsbereiches in einem Fahrkorridor 30 befinden, der im Idealfall mit der Spur 14 deckungsgleich ist. Der Fahrkorridor 30 ist definiert als ein Streifen vorgegebener Breite beiderseits des voraussichtlich von dem eigenen Fahrzeug 20 verfolgten Kurses 32, der in Figur 2 durch eine strichpunktierte Gerade angegeben ist. Im gezeigten Beispiel wird von einem geraden Fahrbahnverlauf und entsprechend von einem geradlinigen Kurs 32 ausgegangen. Verfahren zur Vorhersage des Fahrkurses bei gekrümmtem Fahrbahnverlauf sind als solche bekannt, sollen jedoch hier nicht näher erörtert werden. Zur Entscheidung, ob sich ein Fahrzeug innerhalb des Fahrkorridors 30 befindet, wird für jedes geortete Objekt ein Kursversatz y ermittelt, und es wird überprüft, ob dieser Kursversatz dem Betrage nach kleiner ist als ein Schwellenwert, der der Hälfte der typischen Breite einer Fahrspur entspricht. Der Kursversatz y, der in Figur 2 für das Fahrzeug 26 gezeigt ist, läßt sich aus dem gemessenen Abstand d und dem Azimutwinkel $\psi$ des betreffenden Fahrzeugs berechnen und entspricht näherungsweise dem Produkt $d*\psi$.

Wenn der Fahrer des eigenen Fahrzeugs 20 beabsichtigt, auf die mittlere Spur 16 zu wechseln, so sollten für die Abstandsregelung auch die Fahrzeuge 26 und 28 berücksichtigt werden, die sich in dem der Nachbarspur entsprechenden Fahrkorridor 34 befinden. Nach vollzogenem Spurwechsel, wenn das eigene Fahrzeug 20 etwa auf der Mitte der Spur 16 fährt, ist allein der Fahrkorridor 34 gültig, der dann jedoch durch dieselben Kursversätze y definiert ist wie ursprünglich der Fahrkorridor 30. Während des Spurwechsels ändert das eigene Fahrzeug 20 vorübergehend seine Richtung relativ zu den Fahrbahnen 14, 16, so daß der voraussichtliche Kurs 32, der durch die Geradaus-Richtung des Fahrzeugs definiert ist, nicht mehr dem tatsächlichen Fahrbahnverlauf entspricht.

Damit auch während eines Spurwechsels eine konsistente Abstandsregelung durchgeführt werden kann und Fehlfunktionen vermieden werden, die den Fahrer irritieren oder den Komfort beeinträchtigen können, wird hier ein Verfahren beschrieben, das es gestattet, den Beginn und auch das Ende eines Spurwechsels automatisch zu erkennen.

Wie in Figur 1 gezeigt ist, werden die vom Abstandssensor 10 gelieferten Signale $\psi_i$, die die Azimutwinkel der georteten Objekte angeben, einem Differenzierglied 36 zugeführt, das die zugehörigen Relativwinkelgeschwindigkeiten $\omega_i$ berechnet. Dies kann in der Praxis so geschehen, daß die in aufeinanderfolgenden Regelzyklen gemessenen Azimutwinkel voneinander subtrahiert werden und die Differenz durch die Dauer des Regelzyklus (in der Größenordnung von 1ms) dividiert wird. Zur Unterdrückung von Raucheffekten können die so erhaltenen Rohdaten nachträglich noch einer Tiefpaßfilterung mit einer geeigneten Zeitkonstanten von beispielsweise 0,5s unterzogen werden.

Die gefilterten Relativwinkelgeschwindigkeiten $\omega_i$ werden anschließend in einem Korrekturmodul 38 im Hinblick auf relativgeschwindigkeitsabhängige Effekte korrigiert. Art und Zweck dieser Korrektur werden später erläutert werden.

Die korrigierten Relativwinkelgeschwindigkeiten $\omega'_i$ werden in einer Verknüpfungsschaltung 40 zu einer Kollektivwinkelgeschwindigkeit $\omega_e$ verknüpft, die ein Maß für die Winkeländerung des Gesamtkollektivs aller vorausfahrenden Fahrzeuge 22, 24, 26, 28 relativ zum eigenen Fahrzeug 20 darstellt. Bei der Berechnung der Kollektivwinkelgeschwindigkeit $\omega_e$ werden nur vorausfahrende Fahrzeuge berücksichtigt, während die Signale von Standzielen unberücksichtigt bleiben. Die Verknüpfung besteht im einfachsten Fall in einer Mittelwertbildung über alle vorausfahrenden Fahrzeuge, d.h., die Summe der Relativwinkelgeschwindigkeiten $\omega'_i$ aller vorausfahrenden Fahrzeuge wird durch die Anzahl der berücksichtigten Fahrzeuge dividiert. Die Kollektivwinkelgeschwindigkeit $\omega_e$ wird dann in einer Vergleichsschaltung 42 mit der Gierrate $\omega_0$ des eigenen Fahrzeugs 20 verglichen. Zur Ermittlung der Gierrate $\omega_0$ dient im gezeigten Beispiel an sich bekannter Gierratensensor 44, der die bei einer Gierbewegung des Fahrzeugs auftretende Corioliskraft mißt und dessen Signale auch im Rahmen einer Stabilitätsregelung für das Fahrzeug 20 ausgewertet werden können. Ein eventueller systematischer Fehler (Offset) des Gierratensensors 44 kann erforderlichenfalls eliminiert werden unter Berücksichtigung der Signale eines Lenkradwinkelsensors, einen Querbeschleunigungssensors, eines Raddrehzahlfühlers und dergleichen. Dabei werden die Einzelsignale auch auf Plausibilität geprüft, und bei nicht vorhandener Plausibilität wird auf den Ausfall eines Sensors geschlossen. Auch das Signal des Gierratensensors 44 kann einer Tiefpaßfilterung unterzogen werden, vorzugsweise mit derselben Zeitkonstanten wie bei den Relativwinkelgeschwindigkeitssignalen.

In der Vergleichsschaltung 42 wird aus der Kollektivwinkelgeschwindigkeit $\omega_e$ und der Gierrate $\omega_0$ gemäß nachstehender Formel ein Spurwechselsignal LC gebildet:

$$LC = - \omega_e * \omega_0 / (\omega_e + \omega_0) \tag{1}$$

Das Spurwechselsignal LC wird der Regeleinrichtung 12 zugeführt, die durch Vergleich dieses Signals mit einem geeigneten Schwellenwert, in Figur 1, symbolisiert durch einen Schwellwertschalter 46, erkennt, daß ein Spurwechsel des eigenen Fahrzeugs 20 vorliegt und daraufhin die entsprechenden Anpassungen bei der Abstandsregelung, insbesondere bei der Bestimmung des Fahrkorridors vornimmt.

Figur 3 zeigt den zeitlichen Verlauf eines Spurwechsels des eigenen Fahrzeugs 20, in diesem Fall von der mittleren Spur 16 auf die linke Spur 18. Figur 4 zeigt den entsprechenden zeitlichen Verlauf der Gierrate $\omega_0$, der Kollektivwinkelgeschwindigkeit $\omega_e$ und des Spurwechselsignals LC.

Zur Zeit $t_0$ hat der Spurwechsel noch nicht begonnen, und die Kursrichtung des Fahrzeugs 20 bleibt parallel zur Fahrspur. Folglich ist die Gierrate $\omega_0$ gleich null. Auch die Relativwinkelgeschwindigkeit $\omega_1$ des unmittelbar auf der Spur 16 vorausfahrenden Fahrzeugs VEH1 ist gleich null. Für die Fahrzeuge VEH2 und VEH3 auf den Nachbarspuren gilt dies jedoch nur dann, wenn sie die Relativgeschwindigkeit null haben, d.h., wenn ihr Abstand zum eigenen Fahrzeug 20 unverändert bleibt. Wenn dagegen das eigene Fahrzeug 20 eine höhere Geschwindigkeit als das Fahrzeug VEH2 auf der Spur 14 hat, so vergrößert sich der (negative) Azimutwinkel $\psi_2$ dieses Fahrzeugs dem Betrage nach, und es ergibt sich eine negative Relativwinkelgeschwindigkeit $\omega_2$. Entsprechend ergibt sich auch für das Fahrzeug VEH3 auf der linken Nebenspur eine negative Relativwinkelgeschwindigkeit $\omega_3$, falls dieses Fahrzeug schneller ist als das eigene Fahrzeug. Ohne zusätzliche Korrekturen würde sich daher bei der Mittelwertbildung eine negative Kollektivwinkelgeschwindigkeit ergeben. Um diesen Effekt auszugleichen, wird durch das Korrekturglied 38 die folgende Korrektur vorgenommen:

$$\omega'_i = \omega_i - V_i * \omega_i / d_i \tag{2}$$

Aufgrund dieser Korrektur ist zum Zeitpunkt $t_0$ auch die durch Mittelwertbildung erhaltene Kollektivwinkelgeschwindigkeit $\omega_e$ gleich null. Auch das gemäß der Gleichung (1) gebildete Spurwechselsignal LC hat dann den Wert Null.

Zwischen den Zeitpunkten $t_0$ und $t_2$ schwenkt das Fahrzeug 20 nach links auf die Nachbarspur, und es hat während dieser Phase eine positive Gierrate, die zum Zeitpunkt $t_1$ maximal ist. Entsprechend der Gierbewegung ändert sich auch die Kursrichtung des Fahrzeugs 20. Da die vom Ortungssensor 10 gemessenen Azimutwinkel auf diese geänderte Kursrichtung bezogen sind, ergibt sich für die Kollektivwinkelgeschwindigkeit $\omega_e$ ein Wert, der dem Betrage nach gleich der Gierrate $\omega_0$ ist, jedoch ein entgegengesetzten Vorzeichen hat. Das Produkt aus Gierrate und Kollektivwinkelgeschwindigkeit ist daher negativ, und dementsprechend nimmt LC relativ hohe positive Werte an. Zum Zeitpunkt $t_2$ hat die Gierrate des Fahrzeugs 20 wieder auf 0 abgenommen, und es setzt eine Gegenbewegung zum Einschwenken auf die neue Fahrspur ein. In diesem Augenblick ist auch LC wieder gleich 0. Die Kollektivwinkelgeschwindigkeit $\omega_e$ hat dagegen noch einen geringen negativen Wert. Dies liegt daran, daß die Kursrichtung des Fahrzeugs 20 zum Zeitpunkt $t_2$ nicht parallel zur Kursrichtung der vorausfahrenden Fahrzeuge ist. Insbesondere für die Fahrzeuge VEH1 und VEH2 ergibt sich daher auch bei nicht verschwindender Relativgeschwindigkeit eine negative Relativwinkelgeschwindigkeit. Dementsprechend erfolgt der Nulldurchgang der Kurve $\omega_e$ erst zu einem späteren Zeitpunkt, so daß LC vorübergehend negative Werte annimmt.

Zum Zeitpunkt $t_3$ erreicht die Gierrate $\omega_0$ ein Minimum und die Kollektivwinkelgeschwindigkeit $\omega_e$ ein Maximum, und auch LC nimmt erneut ein Maximum an. Bis zum Abschluß des Spurwechsels zur Zeit $t_4$ nehmen dann sämtliche Signale wieder auf 0 ab.

Man erkennt in Figur 4, daß der Spurwechsel durch einen charakteristischen S-förmigen Verlauf der Gierrate $\omega_0$ und durch einen charakteristischen "Kamelhöcker" des Spurwechselsignals LC gekennzeichnet ist. Der Schwellwertsensor 46 erkennt einen beginnenden Spurwechsel daran, daß das Spurwechselsignal LC einen bestimmten Schwellenwert TH überschreitet (zur Zeit $t_s$ in Figur 4). Danach markiert eine kurzfristige Unterschreitung dieses Schwellenwertes, etwa zur Zeit $t_2$, die Mitte des Spurwechselvorgangs, während eine erneute Unterschreibung des Schwellenwertes TH zur Zeit $t_e$ das Ende des Spurwechsels markiert.

Zum Vergleich illustrierten Figuren 5 und 6 eine Fahrsituation, bei der kein Spurwechsel stattfindet, sondern das eigene Fahrzeug 20 und ein vorausfahrendes Fahrzeug VEH1 aus einer Kurve ausfahren. Die Positionen der beiden Fahrzeuge zum Zeitpunkt $t_1$ sind in Figur 5 in fetten Linien eingezeichnet, während die Positionen zur Zeit $t_2$ in dünneren Linien und zur Zeit $t_3$ gestrichelt eingezeichnet sind.

Zur Zeit $t_1$ befinden sich beide Fahrzeuge noch in der Kurve. Das eigene Fahrzeug 20 hat eine positive Gierrate $\omega_0$, Bei annähernd gleicher Fahrzeuggeschwindigkeit bleiben die Positionen der Fahrzeuge 20 und VEH1 relativ zueinander jedoch unverändert, so daß die Kollektivwinkelgeschwindigkeit $\omega_0$ (die in diesem Fall allein durch $\omega'_1$ gegeben ist) den Wert 0 hat.

Folglich hat auch LC den Wert 0. Dies bedeutet, daß das Durchfahren einer Kurve von dem System nicht fälschlich als ein Spurwechsel interpretiert wird.

Zwischen den zwei Punkten $t_1$ und $t_2$ beginnt das vorausfahrende Fahrzeug VEH1, aus der Kurve auszufahren. Seine Relativwinkelgeschwindigkeit nimmt daher ab, während die Gierrate $\omega_0$ des eigenen Fahrzeugs noch konstant bleibt. Das Spurwechselsignal LC wird daher positiv und nimmt bei $t_2$ ein flaches Maximum an. Da mehrspurige Schnellstraßen jedoch im allgemeinen sehr große Krümmungsradien haben, sind die hier auftretenden Gierraten und Relativwinkelgeschwindigkeiten sehr niedrig, so daß das Spurwechselsignal LC unterhalb des Schwellenwertes TH bleibt.

Eine Abwandlung des beschriebenen Verfahrens könnte darin bestehen, daß als das Signal $\omega_0$, das zur Berechnung des Spurwechselsignals LC dient, nicht die tatsächlich gemessene Gierrate herangezogen wird, sondern die aktuell gemessene Gierrate abzüglich eines gleitenden Mittelwertes aus den zuvor gemessenen Gierraten. Beim Durchfahren der Kurve mit konstanter tatsächlicher Gierrate würde sich dann der gleitende Mittelwert allmählich der aktuellen Gierrate annähern, so daß das Signal $\omega_0$ auf nahezu 0 abnähme. Dementsprechend bliebe das Spurwechselsignal LC zwischen den Zeitpunkten $t_1$ und $t_2$ in Figur 6 kleiner. Nach dem Zeitpunkt $t_2$ würde die aktuelle Gierrate unter den gleitenden Mittelwert abnehmen, so daß das Signal $\omega_0$ negativ würde. Damit würde auch das Signal LC zwischen den Zeiten $t_2$ und $t_3$ negativ. Bei dieser Variante könnte deshalb der Schwellenwert TH verringert werden, so daß die Empfindlichkeit der Spurwechselerkennung gesteigert würde.

Die Regeleinrichtung 12 kann auf die Erkennung eines Spurwechsels, zur Zeit $t_s$ in Figur 4, je nach Ausführungsform auf unterschiedliche Weise reagieren. Beispielsweise kann die Ortungstiefe des Radarsensors verringert werden, so daß die Regeleinrichtung 12 nur noch dann auf vorausfahrende Fahrzeuge reagiert, wenn diese sich in sehr geringem Abstand vor dem Fahrzeug 20 befinden und unmittelbare Kollisionsgefahr besteht. Hierdurch wird verhindert, daß zum Zeitpunkt $t_2$ in Figur 3, wenn die Kursrichtung des Fahrzeugs 20 schräg zur Fahrbahn verläuft, irrelevante Objekte ausgewertet werden, die sich außerhalb der interessierenden Fahrspuren befinden.

In einer anderen Ausführungsform wird bei erkanntem Spurwechsel der ursprüngliche Fahrkorridor "eingefroren". Dies kann etwa dadurch geschehen, daß die gemessene Gierrate $\omega_0$ vom Zeitpunkt $t_s$ an aufintegriert wird. Das Integral gibt dann näherungsweise den Winkel zwischen der aktuellen Kursrichtung des Fahrzeugs und der Fahrbahnrichtung an. Wenn dieser Winkel von den gemessenen Azimutwinkeln $\psi_i$ abgezogen wird, entspricht dies im Ergebnis einer Beibehaltung des ursprünglichen Fahrkorridors.

Alternativ ist es möglich, die Auswertung der Ortungssignale zum Zeitpunkt $t_s$ auf diejenigen Fahrzeuge zu beschränken, die sich vor diesem Zeitpunkt im aktuellen Fahrkorridor befunden haben. Dies ist möglich, da sich die für dasselbe Fahrzeug gemessenen Ortungsdaten $d_i$, $v_i$ und $\psi_i$ von Regelzyklus zu Regelzyklus nur sehr wenig voneinander unterscheiden, so daß die einzelnen Fahrzeuge identifiziert und in ihrer Bewegung verfolgt werden können. Ergänzend dazu kann eine Kollisionsverhinderungsstrategie verfolgt werden, bei der das System auch auf bisher nicht berücksichtigte Fahrzeuge reagiert, wenn diese sich in sehr geringem Abstand vor dem eigenen Fahrzeug 20 befinden.

Darüber hinaus ist es möglich, auch das Signal des Blinkschalters in die Auswertung einzubeziehen. Wenn in der in Figur 2 gezeigten Situation durch Setzen des Blinkschalters eine Spurwechselabsicht des Fahrers erkennbar wird, kann der Fahrkorridor bereits auf eine Kombination der beiden Fahrkorridore 30 und 34 erweitert werden. Gleichzeitig kann der Schwellenwert TH reduziert werden, damit der tatsächliche Beginn des Spurwechsels früher erkannt wird. Bei erkanntem Beginn des Spurwechsels wird dann der erweiterte Fahrkorridor eingefroren, und wenn schließlich bei $t_e$ das Ende des Spurwechsels erkannt wird, erfolgt eine Verengung auf den neuen Fahrkorridor 34.

**Patentansprüche**

1. Verfahren zur Erkennung eines Spurwechsels eines Fahrzeugs (20), das ein winkelauflösendes Ortungsgerät (10) zur Ortung vorausfahrender Fahrzeuge (VEH1, VEH2, VEH3) und eine Einrichtung (44) zur Bestimmung der eigenen Gierrate ($\omega_0$) aufweist, worin die Winkelgeschwindigkeit ($\omega_i$) mindestens eines vorausfahrenden Fahrzeugs relativ zum eigenen Fahrzeug (20) mit Hilfe des Ortungsgerätes (10) gemessen wird, **dadurch gekennzeichnet daß** ein den Spurwechsel anzeigendes Spurwechselsignal (LC) durch Vergleich der gemessenen Winkelgeschwindigkeit ($\omega_i$) mit der eigenen Gierrate ($\omega_0$) gebildet wird.

2. Verfahren nach Anspruch 1, **dadurch gekennzeichnet, daß** die gemessene Relativwinkelgeschwindigkeit ($\omega_i$) des vorausfahrenden Fahrzeugs vor dem Vergleich mit der eigenen Gierrate ($\omega_0$) einer Korrektur unterzogen wird, die eine von der Relativgeschwindigkeit ($v_i$) des vorausfahrenden Fahrzeugs unabhängige Relativwinkelgeschwindigkeit ($\omega'_i$) liefert.

**3.** Verfahren nach Anspruch 1 oder 2, **dadurch gekennzeichnet, daß** aus den korrigierten oder unkorrigierten Relativwinkelgeschwindigkeiten ($\omega_i$, $\omega'_i$) mehrerer vorausfahrender Fahrzeuge (VEH1, VEH2, VEH3) eine Kollektivwinkelgeschwindigkeit ($\omega_e$) gebildet wird, die eine relative Winkeländerung des Ensembles des vorausfahrenden Fahrzeuge repräsentiert, und daß die eigene Gierrate ($\omega_0$) mit dieser Kollektivwinkelgeschwindigkeit ($\omega_e$) verglichen wird.

**4.** Verfahren nach Anspruch 3, **dadurch gekennzeichnet, daß** die Kollektivwinkelgeschwindigkeit ($\omega_e$) ein gewichteter oder ungewichteter Mittelwert der korrigierten oder unkorrigierten Relativwinkelgeschwindigkeiten ($\omega_i$, $\omega'_i$) der vorausfahrenden Fahrzeuge ist.

**5.** Verfahren nach einem der vorstehenden Ansprüche, **dadurch gekennzeichnet, daß** als Gierrate ($\omega_0$) des eigenen Fahrzeugs (20) das Signal eines Gierratensensors (44) ausgewertet wird.

**6.** Verfahren nach einem der vorstehenden Ansprüche, **dadurch gekennzeichnet, daß** das Spurwechselsignal (LC) nach einer Formel berechnet wird, die genau dann einen hohen positiven Wert aufweist, wenn die eigene Gierrate ($\omega_0$) und die Relativ- oder Kollektivwinkelgeschwindigkeit ($\omega_i$, $\omega_e$) von null verschiedene Beträge und entgegengesetzte Vorzeichen haben.

**7.** Verfahren nach Anspruch 6, **dadurch gekennzeichnet, daß** zur Berechnung des Spurwechselsignals LC die Kreuzkorrelation der eigenen Gierrate ($\omega_0$) mit der Relativ- oder Kollektivwinkelgeschwindigkeit ($\omega_i$, $\omega_e$) berechnet wird.

**8.** Verfahren nach einem der vorstehenden Ansprüche, **dadurch gekennzeichnet, daß** ein beginnender Spurwechsel daran erkannt wird, daß das Spurwechselsignal (LC) einen vorgegebenen Schwellenwert (TH) überschreitet.

**9.** Verfahren nach Anspruch 8, **dadurch gekennzeichnet, daß** der Schwellenwert (TH) verringert wird, wenn ein Blinkschalter des eigenen Fahrzeugs (20) gesetzt wird.

**10.** Verfahren nach Anspruch 8 oder 9, **dadurch gekennzeichnet, daß** das Ende des Spurwechsels erkannt wird, wenn nach erkanntem Beginn des Spurwechsels das Spurwechselsignal (LC) zum zweiten Mal unter den Schwellenwert (TH) sinkt.

**Claims**

**1.** Method for detecting a lane change of a vehicle (20) which has an angle-resolving locating device (10) for locating vehicles (VEH1, VEH2, VEH3) travelling ahead and an apparatus (44) for determining the yaw rate ($\omega_0$) of the driver's own vehicle, wherein the angular speed ($\omega_i$) of at least one vehicle travelling ahead relative to the driver's own vehicle (20) is measured using the locating device (10), **characterized in that** a lane change signal (LC) which indicates the lane change is formed by comparing the measured angular speed ($\omega_i$) with the driver's own yaw rate ($\omega_0$).

**2.** Method according to Claim 1, **characterized in that** the measured relative angular speed ($\omega_i$) of the vehicle travelling ahead is subjected, before the comparison with the driver's own yaw rate ($\omega_0$), to a correction which supplies a relative angular speed ($\omega'_i$) which is independent of the relative speed ($v_i$) of the vehicle travelling ahead.

**3.** Method according to Claim 1 or 2, **characterized in that** a collective angular speed ($\omega_e$), which represents a relative change in angle of all of the vehicles travelling ahead, is formed from the corrected or uncorrected relative angular speeds ($\omega_i$, $\omega'_i$) of a plurality of vehicles (VEH1, VEH2, VEH3) travelling ahead, and **in that** the yaw rate ($\omega_0$) of the driver's own vehicle is compared with this collective angular speed ($\omega_e$).

**4.** Method according to Claim 3, **characterized in that** the collective angular speed ($\omega_e$), is a weighted or unweighted mean value of the corrected or uncorrected relative angular speeds ($\omega_i$, $\omega'_i$) of the vehicles travelling ahead.

**5.** Method according to one of the preceding claims, **characterized in that** the signal of a yaw rate sensor (44) is evaluated as a yaw rate ($\omega_0$) of the driver's own vehicle (20).

**6.** Method according to one of the preceding claims, **characterized in that** the lane change signal (LC) is calculated according to a formula which has a high positive value precisely when the yaw rate ($\omega_0$) of the driver's own vehicle and the relative or collective angular speed ($\omega_i$, $\omega_e$) have absolute values which are different from zero and opposite signs.

7. Method according to Claim 6, **characterized in that** in order to calculate the lane change signal (LC) the cross-correlation of the yaw rate ($\omega_0$) of the driver's own vehicle with the relative or collective angular speed ($\omega_i$, $\omega_e$) is calculated.

8. Method according to one of the preceding claims, **characterized in that** the start of a lane change is detected by virtue of the fact that the lane change signal (LC) exceeds a predefined threshold value (TH).

9. Method according to Claim 8, **characterized in that** the threshold value (TH) is reduced if a flashing indicator light switch of the driver's own vehicle (20) is activated.

10. Method according to Claim 8 or 9, **characterized in that** the end of the lane change is detected if the lane change signal (LC) drops below the threshold value (TH) for a second time after the start of the lane change has been detected.

## Revendications

1. Procédé de détection d'un changement de bande de circulation d'un véhicule (20) qui présente un appareil (10) de localisation à résolution angulaire qui localise les véhicules (VEH1, VEH2, VEH3) qui se déplacent devant lui et un dispositif (44) de détermination de la vitesse propre de lacet ($\omega_0$) dans lequel la vitesse angulaire ($\omega_i$) entre au moins un véhicule se déplaçant devant et le véhicule propre (20) étant mesurée à l'aide de l'appareil (10) de localisation, **caractérisé en ce que** un signal (LC) de changement de bande de circulation qui indique le changement de bande de circulation est formé par comparaison de la vitesse angulaire mesurée ($\omega_i$) et de la vitesse propre de lacet ($\omega_0$).

2. Procédé selon la revendication 1, **caractérisé en ce qu'**avant la comparaison avec la vitesse propre de lacet ($\omega_0$), la vitesse angulaire relative ($\omega_i$) mesurée du véhicule se déplaçant devant subit une correction qui délivre une vitesse angulaire relative ($\omega'_i$) indépendante de la vitesse relative ($v_i$) du véhicule se déplaçant devant.

3. Procédé selon les revendications 1 ou 2, **caractérisé en ce qu'**une vitesse angulaire collective ($\omega_e$) qui représente la modification angulaire relative de l'ensemble des véhicules se déplaçant devant est formée à partir de la vitesse angulaire relative ($\omega_i$, $\omega'_i$) corrigée ou non corrigée de plusieurs véhicules (VEH1, VEH2, VEH3) qui se déplacent devant et **en ce que** la vitesse propre de lacet ($\omega_0$) est comparée à cette vitesse angulaire collective ($\omega_e$).

4. Procédé selon la revendication 3, **caractérisé en ce que** la vitesse angulaire collective ($\omega_e$) est une valeur moyenne pondérée ou non pondérée des vitesses angulaires relatives ($\omega_i$, $\omega'_i$) corrigées ou non corrigées des véhicules se déplaçant devant.

5. Procédé selon l'une des revendications précédentes, **caractérisé en ce que** comme vitesse de lacet ($\omega_0$) du véhicule propre (20), on évalue le signal d'une sonde (44) de vitesse de lacet.

6. Procédé selon l'une des revendications précédentes, **caractérisé en ce que** le signal (LC) de changement de bande de circulation est calculé suivant une formule qui présente une valeur positive élevée exactement lorsque la vitesse propre de lacet ($\omega_0$) et la vitesse angulaire relative ou la vitesse angulaire collective ($\omega_i$, $\omega_e$) ont des valeurs différentes de zéro et des signes opposés.

7. Procédé selon la revendication 6, **caractérisé en ce que** pour calculer le signal (LC) de changement de bande de circulation, on calcule la corrélation croisée entre la vitesse propre de lacet ($\omega_0$) et la vitesse angulaire relative ou la vitesse angulaire collective ($\omega_i$, $\omega_e$).

8. Procédé selon l'une des revendications précédentes, **caractérisé en ce qu'**un début de changement de bande de circulation est détecté lorsque le signal (LC) de changement de bande de circulation dépasse une valeur de seuil (TH) prédéterminée.

9. Procédé selon la revendication 8, **caractérisé en ce que** la valeur de seuil (TH) est diminuée si le commutateur de clignotant du véhicule propre (20) est actionné.

10. Procédé selon les revendications 8 ou 9,

**caractérisé en ce que** la fin du changement de bande de circulation est détectée lorsqu'après que le début d'un changement de bande de circulation a été détecté, le signal (LC) de changement de bande de circulation descend pour la deuxième fois en dessous de la valeur de seuil (TH).

*Fig. 1*

*Fig. 2*

*Fig. 3*

*Fig. 4*

*Fig. 5*

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19637245 A1

- EP 1034963 A